# EUROPEAN PATENT APPLICATION

(11) **EP 1 164 659 A1**
(43) Date of publication of application: **19.12.2001**
(21) Application number: 01112873.3
(22) Date of filing: 31.05.2001
(51) Int. Cl.: H01R 9/18, H02G 3/06, H05K 5/02

(54) **Combined clamping device for cables and spiral sheaths, particularly for protcting connecting cables**

(30) Priority: 08.06.2000 IT PD000043
(71) Applicant: TEKNO SYSTEM S.R.L., I-36010 CARRE' (VICENZA) (IT)
(72) Inventor: Marchesini, Renzo, 36015 Schio, (Prov. of Vicenza) (IT)
(74) Representative: Modiano, Guido, Dr.-Ing.

(57) **Abstract**

A combined clamping device (10) for cables (13) and spiral sheaths (21) particularly for protecting connecting cables (13), comprising:
at least one first portion (11) for coupling to a box-like container (12) from which a cable (13) to be protected protrudes, the first portion (11) being monolithic with respect to cable clamping wings (14) of
at least one corresponding second portion (18) which comprises a grommet, a ring (17) and the cable clamping wings (14), to be arranged outside the container (12), the at least one first portion (11) and corresponding second portion (18) cooperating with a third portion (19) for connecting the spiral sheath (21), which is also designed to be arranged outside the container (12).

## Description

The present invention relates to a combined clamping device for cables and spiral sheaths particularly for protecting connecting cables.

Conventional clamping devices are used to protect the connecting cables that exit from box-like containers, such as for example TV camera housings.

In particular, these devices, according to the CEI EN 60529 standard, must ensure an adequate degree of protection of the cables against the penetration of foreign matter, such as dust, and/or against the infiltration of liquids such as water.

Cable clamping connectors are already known in the prior art which allow to ensure protection against the penetration of dust and against the effects of continuous immersion in water, but have the defect that they cannot be associated with the spirally-reinforced sheaths being usually used in civil and industrial systems to protect cables.

Connectors are also known which allow to accommodate the spiral sheath but do not provide an adequate seal between the sheath and the connector, because they are unable to ensure protection against the penetration of dust and tightness against powerful water jets.

In this manner, the box-like container that contains the sheath connector is not hermetic and water may thus enter it, with the obvious consequent problems.

There is also a connector in which the cable clamping portion and the sheath connector are monolithic.

In this case, however, the connector is rigidly coupled to the box-like container and while the cable clamping portion is arranged inside the box-like container the connector for the spiral sheath is arranged externally thereto.

Such a connector is particularly awkward, since it is necessary to access the inside of the box-like body in order to lock the cable with the cable clamping portion.

Moreover, the connector can fix only one cable per sheath.

The aim of the present invention is to solve or substantially reduce the above mentioned problems related to conventional connectors.

Within this aim, an object of the invention is to provide a device whose structure allows the sheath and the cable to be fixed externally with respect to the box-like container.

Another object is to provide a device which guarantees a degree of tightness which complies with the standards.

Another object is to provide a device which is constructively particularly simple and is easy to maintain.

Another object is to provide a device which allows to protect and fix a plurality of cables by using a single spiral sheath.

Another object is to provide a low-cost device.

This aim and these and other objects which will become better apparent hereinafter are achieved by a combined clamping device for cables and spiral sheaths particularly for protecting connecting cables, characterized in that it comprises:
at least one first portion for coupling to a box-like container from which a cable to be protected protrudes,
at least one corresponding second portion which comprises a grommet, a ring and cable clamping wings, to be arranged outside said container, said at least one first portion and corresponding second portion cooperating with a third portion for connecting the spiral sheath, which is also designed to be arranged outside said container, said first portion being monolithic with respect to cable clamping wings.

Further characteristics and advantages of the invention will become better apparent from the description of some preferred but not exclusive embodiments thereof, illustrated only by way of non-limitative example in the accompanying drawings, wherein:
Figure 1 is a partially sectional view of an embodiment of the invention associated with a TV camera housing;
Figure 2 is an exploded sectional view of the device of Figure 1;
Figure 3 is a partially sectional view of a second embodiment of the invention associated with a TV camera housing.

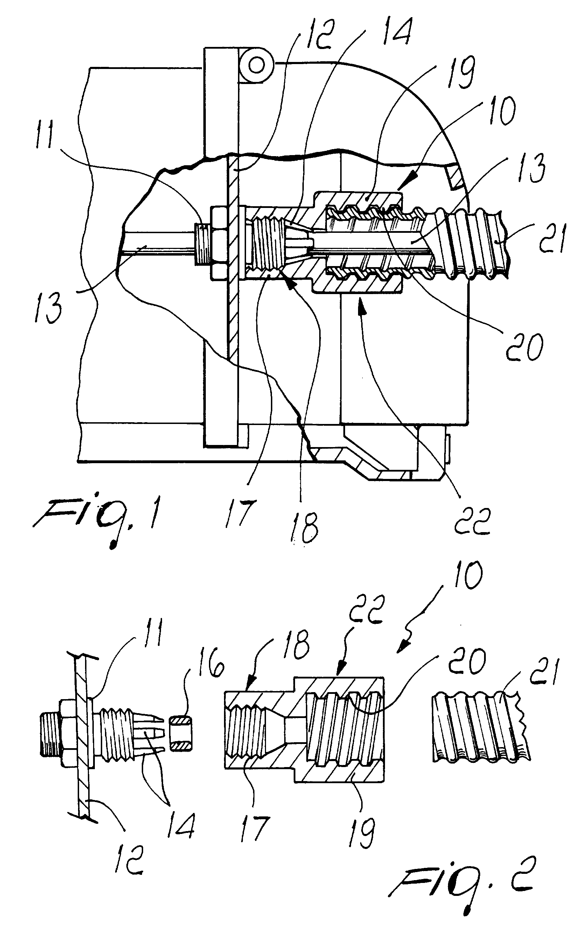

With particular reference to Figures 1 and 2, a device according to the invention, in a first embodiment, is generally designated by the reference numeral 10.

The device 10 is constituted by at least one first portion 11 to be fixed to the back wall of a TV camera housing 12 and through which a connecting cable 13 passes.

On the outside of the TV camera housing 12, the first portion 11 is provided with monolithic wings 14 which, together with a grommet 16 and a ring 17, constitute at least one second portion 18 of the device 10 which acts as a cable clamp.

In particular, the ring 17 is monolithic with respect to a third portion 19 provided with a cylindrical cavity 20 being shaped for the removable insertion, by way of a screwing action, of a spirally-reinforced sheath 21.

The ring 17 and the third portion 19 are constituted by a substantially cylindrical connecting element 22.

In order to provide the seal, a connecting cable 13 is passed through the first portion 11, the connecting element 22, and inside the spiral sheath 21.

By screwing the connecting element 22 onto the first portion 11, the ring 17, the wings 14 and the grommet 16 cooperate so as to clamp the cable 13 and form the seal.

The connection of the spiral sheath 21 is also provided at the same time; such sheath engages the corresponding complementarily shaped cylindrical cavity 20.

In practice it has been observed that with this first embodiment 10 of the invention it is possible to provide a degree of tightness, in compliance with the standards, with the cable clamping portion and the spiral sheath connector arranged outside the TV camera housing 12.

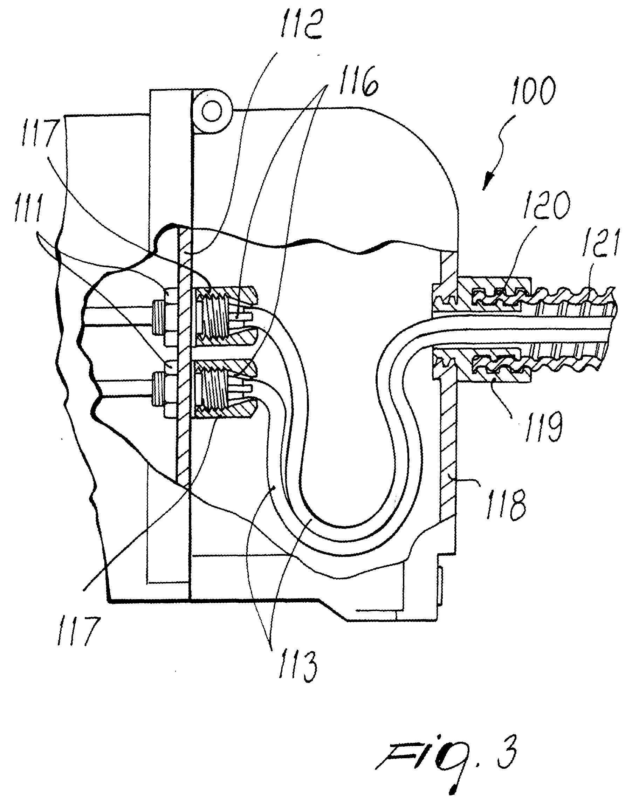

Figure 3 illustrates a second embodiment of the invention, generally designated by the reference numeral 100.

In this case, the device 100 comprises two first connecting portions 111 to be fixed to the back wall of the housing of a TV camera 112, each portion allowing the passage of a connecting cable 113.

Each portion 111 is provided with cable clamping wings 114 which are arranged externally with respect to the housing 112 and clamp and fix the cables 113 by cooperating with grommets 116 and rings 117.

A cover 118 is articulated to the back wall of the TV camera housing 112 and is reversibly fixed to the housing 112, enclosing and protecting the connecting cables 113.

The third portion 119 of the device 100 is associated with the cover 118 by way of a reversible connection, for example of the bayonet type.

The third portion 119 is constituted by a substantially cylindrical connecting element being provided with a cylindrical cavity 120 which is shaped for the removable insertion, by way of a screwing action, of a spirally-reinforced sheath 121 inside which the connecting cables 113 are passed.

In this case also, a protection for the connecting cables has been provided which complies with the standards by way of devices arranged substantially externally with respect to the box-like container.

Advantageously, this embodiment allows to use a same spiral sheath for the passage and protection of a plurality of connecting cables.

In practice it has been observed that the intended aim and objects of the present invention have been achieved.

The technical details may be replaced with other technically equivalent elements.

The materials, so long as they are compatible with the contingent use, as well as the dimensions, may be any according to requirements.

The disclosures in Italian Utility Model Application No. PD2000U000043 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A combined clamping device for cables and spiral sheaths particularly for protecting connecting cables, **characterized in that** it comprises:
at least one first portion for coupling to a box-like container from which a cable to be protected protrudes;
at least one corresponding second portion which comprises a grommet, a ring and cable clamping wings, to be arranged outside said container, said at least one first portion and corresponding second portion cooperating with a third portion for connecting the spiral sheath, which is also designed to be arranged outside said container, said first portion being monolithic with respect to said cable clamping wings.

2. The device according to claim 1, **characterized in that** said third portion is monolithic with the ring of said second portion so as to provide a connecting element.

3. The device according to claim 2, **characterized in that** said connecting element is substantially cylindrical, its front portion being constituted by said cable clamping ring, its axially opposite rear portion being provided with a cylindrical cavity which is shaped for the removable insertion, by way of a screwing action, of a spirally-reinforced sheath, so as to provide said third portion.

4. The device according to claim 1, **characterized in that** said third portion is constituted by a tubular element which detachably engages in a covering and protective element for said at least one second portion which is detachably fixed to said box-like container.

5. The device according to claim 4, **characterized in that** said box-like container is the housing of a TV camera and said covering and protective element is a cover which is articulated to the back wall of said housing and is reversibly fixed thereto, said cover concealing said at least one second portion.
